# EUROPÄISCHE PATENTSCHRIFT

(11) **EP 3 032 171 B1**
(45) Veröffentlichungstag und Bekanntmachung des Hinweises auf die Patenterteilung: **31.01.2018**
(21) Anmeldenummer: 14196947.7
(22) Anmeldetag: 09.12.2014
(51) Int. Cl.: F23C 3/00, F23L 15/02, F23L 15/04

(54) **Regenerativ beheiztes Strahlrohr**
Regenerativ heated radiant tube
Tube en acier régénératif chauffé

(43) Veröffentlichungstag der Anmeldung: 15.06.2016
(73) Patentinhaber: WS-Wärmeprozesstechnik GmbH, 71272 Renningen (DE)
(72) Erfinder: Wünning, Joachim G., Dr., 71229 Leonberg (DE); Wünning, Joachim A., Dr., 71229 Leonberg (DE)
(74) Vertreter: Rüger, Barthelt & Abel

(56) Entgegenhaltungen:
- DE-A1- 4 419 332
- GB-A- 779 669

## Beschreibung

Gegenstand der Erfindung ist ein Strahlheizrohr mit verminderter NOx-Bildung sowie ein Verfahren zum Betrieb eines solchen.

Strahlheizrohre werden zur indirekten Beheizung von Industrieöfen eingesetzt. In solchen Strahlheizrohren kann der Wirkungsgrad der Brennstoffausnutzung durch Luftvorwärmung erhöht werden. Zur Luftvorwärmung werden dabei mit Rekuperatoren oder Regeneratoren ausgestattete Brenner verwendet. Brenner mit Regeneratoren haben im Allgemeinen einen besseren Wirkungsgrad, jedoch ist der apparative Aufwand für den erforderlichen Umschaltmechanismus erhöht.

Aus der DE 44 19 332 A1 ist ein Industriebrenner mit Strahlrohr und Rekuperator bzw. auch Regeneratoren bekannt, wobei die Beheizung des Strahlrohrs durch flammenlose Oxidation erfolgt. In dem Strahlrohr wird dazu eine großräumige Abgasrezirkulation aufrechterhalten.

GB 779 669 A offenbart ein Strahlheizrohr zur Beheizung eines Ofens. Innerhalb des Strahlheizrohrs ist ein Brennerrohr angeordnet, das mehrere Öffnungen aufweist, um die Temperatur des Strahlheizrohrs zu vergleichmäßigen.

Durch Luftvorwärmung kann es zu einer sehr stark ansteigenden thermischen NOx-Bildung im Abgas kommen. Die in DE 197 40 788 C1, DE 44 19 332 A1 oder EP 2 184 538 A1 angegebenen Lösungsvorschläge beruhen überwiegend auf der Methode der FLOX-Verbrennung mit sehr starker Rezirkulation der Verbrennungsabgase. Hierfür muss jedoch die geometrische Form der Strahlrohre geeignet sein. Dies ist beispielsweise bei sogenannten P-Rohren, Doppel-P-Rohren oder Mantelstrahlrohren mit Flammrohr der Fall.

Bei beengten Einbauverhältnissen in Industrieöfen werden jedoch sehr schlanke Strahlrohre mit einem Verhältnis von dem Strahlrohrdurchmesser zu der Strahlrohrlänge von kleiner als 1:10 benötigt. Hierfür kommt die FLOX-Verbrennung mit starker Rezirkulation der NOx-Absenkung nicht in Betracht.

Die Erfindung legt die Aufgabe zugrunde, ein Konzept insbesondere für schlanke Strahlrohre anzugeben, das die Unterdrückung thermischer NOx-Bildung weitgehend erlaubt.

Diese Aufgabe wird erfindungsgemäß mit einer Brenneranordnung mit einem Strahlrohr mit den Merkmalen nach Anspruch 1 und einem Verfahren zum Betrieb einer Brenneranordnung nach Anspruch 12 gelöst:

Die erfindungsgemäße Brenneranordnung weist ein Strahlheizrohr und mindestens zwei Regeneratoren auf. Der erste Regenerator ist an dem ersten Ende des Strahlheizrohrs und der zweite Regenerator an dem zweiten Ende des Strahlheizrohrs angeordnet. Der erste Regenerator und der zweite Regenerator sind mit einer Ventilanordnung verbunden. In einem ersten Betriebszustand der Ventilanordnung wird das Strahlheizrohr über den ersten Regenerator mit Verbrennungsluft beaufschlagt. In dem ersten Betriebszustand der Ventilanordnung wird ferner das Abgas aus dem Strahlheizrohr über den zweiten Regenerator geführt. In dem zweiten Betriebszustand wird dem Strahlheizrohr die Luft zur Verbrennung über den zweiten Regenerator zugeführt, während das Verbrennungsabgas durch den ersten Regenerator abgeführt wird. In dem ersten Betriebszustand heizt das heiße Abgas den zweiten Regenerator auf. Der in einem Betriebszustand zuvor aufgeheizte erste Regenerator gibt die Wärme an die Luft zur Verbrennung ab. Nach dem Umschalten der Ventilanordnung von dem ersten Betriebszustand in den zweiten Betriebszustand wird die Luft zur Verbrennung durch den zweiten Regenerator aufgeheizt, während das heiße Abgas den ersten Regenerator aufheizt. Zwischen dem ersten Betriebszustand und dem zweiten Betriebszustand wird zyklisch bzw. alternierend umgeschaltet. Das Innenrohr ist mit einer Wasser- oder Wasserdampfquelle und/oder mit einer Luftquelle verbunden, wobei das Innenrohr mit einer Vormischkammer zur Herstellung eines Gemischs aus Brennstoff und Wasserdampf und/oder Luft verbunden ist, die mit der Brennstoffquelle und der Wasser- oder Wasserdampfquelle und/oder der Luftquelle verbunden ist.

Innerhalb des geraden oder gekrümmten Strahlheizrohres ist ein vorzugsweise der Form des Strahlheizrohrs folgendes Innenrohr angeordnet. Das Innenrohr erstreckt sich wenigstens durch einen Abschnitt des Strahlheizrohres. Das Innenrohr kann sich auch entlang der gesamten Länge des Strahlheizrohres axial durch dieses erstrecken. Alternativ erstreckt sich das Innenrohr lediglich entlang eines Abschnitts des Strahlheizrohres. In dem Strahlheizrohr können ein oder mehrere Innenrohre angeordnet sein. Vorzugsweise ist das Innenrohr unverzweigt. Das Innenrohr ist mit einer Brennstoffzufuhrleitung verbunden, über die das Innenrohr mit Brennstoff gespeist wird. Das Innenrohr bildet einen Gaskanal für Brennstoff oder Gemisch mit Brennstoff. Das Innenrohr weist Austrittsöffnungen auf, die das Innere des Strahlheizrohres münden. Die Austrittsöffnungen sind entlang der Länge des Innenrohrs verteilt.

Durch die auf dem Innenrohr verteilten Austrittsöffnungen wird der Brennstoff oder ein Gemisch mit Brennstoff über die Länge des Innenrohrs verteilt an den Innenraum des Strahlheizrohres abgegeben. Die Austrittsöffnungen können dabei beispielsweise radial orientiert sein. Der Brenngas- oder Gemischstrom tritt aus den Austrittsöffnungen in den Brennraum des Strahlheizrohres vorzugsweise quer zu der Strömungsrichtung der durch das Strahlheizrohr strömenden Verbrennungsluft. Durch die stufenweise bzw. verteilte Abgabe des Brennstoffs kommt es zu einer auf einen längeren Abschnitt des Strahlrohrs verteilten Energieumsetzung. Die Temperatur entlang des Strahlrohrs ist gegenüber der adiabaten Verbrennungstemperatur abgesenkt. Dadurch ist die thermische NOx-Bildung weitgehend unterdrückt und die Energieabgabe des Strahlrohrs über seine Länge vergleichmäßigt.

Vorzugsweise sind Austrittsöffnungen zusätzlich entlang des Umfangs des Innenrohrs auf dem Innenrohr angeordnet, so dass eine Energieumsetzung nicht nur über die Länge sondern auch über den Umfang des Innenrohrs bzw. des Strahlheizrohrs verteilt erfolgt.

Die Austrittsöffnungen sind an dem Innenrohr insbesondere derart angeordnet, dass das Strahlrohr entlang des Brennerabschnitts des Innenrohrs eine einheitliche Temperatur aufweist. Der Brennerabschnitt erstreckt sich entlang des mit Öffnungen versehenen Abschnitts des Innenrohrs.

Die Mittelachse des ersten oder zweiten Regenerators kann mit der Mittelachse des anderen Regenerators zusammenfallen oder die Mittelachsen können parallel zueinander mit Abstand verlaufen. Der erste Regenerator und der zweite Regenerator sind voneinander vorzugsweise axial bzw. entlang des Luft/Abgas-Strömungswegs durch das Strahlheizrohr beabstandet.

Der erste Regenerator kann mit einer ersten Luft-Abgas-Leitung verbunden sein. Der zweite Regenerator kann mit einer zweiten Luft-Abgas-Leitung verbunden sein. Für den ersten Regenerator sind vorzugsweise eine einzige Luftdurchströmrichtung und eine einzige Abgasdurchströmrichtung festgelegt, die einander entgegengerichtet sind. Auch für den zweiten Regenerator sind vorzugsweise nur eine einzige Luftdurchströmrichtung und eine einzige Abgasdurchströmrichtung festgelegt, die ebenfalls einander entgegengerichtet sind.

Vorzugsweise ist das Innenrohr einseitig mit Brennstoff oder einem Gemisch mit Brennstoff gespeist. Das Innenrohr kann beispielsweise an einem ersten Innenrohrende mit einer Brennstoffzufuhrleitung verbunden sein. Das zweite Innenrohrende kann geschlossen sein. Indem das Innenrohr sowohl in dem ersten Betriebszustand als auch in dem zweiten Betriebszustand von nur einer Seite gespeist ist, ist der apparative Aufwand für die Umschaltung zwischen den beiden Betriebszuständen gering. Durch die einseitige Speisung des Innenrohrs kann es zu einer gegenläufigen Strömung von Brennstoff in dem Innenrohr und von Luftbrennstoffgemisch bzw. Abgas in dem Strahlheizrohr in einem Betriebszustand und einer mitläufigen Strömung von Brennstoff in dem Innenrohr und Brennstoffluftgemisch bzw. Abgas in dem Strahlheizrohr in einem anderen Betriebszustand kommen.

In einer Ausführungsform können die Strömung der Luft durch das Strahlheizrohr und die Strömung des Brenngases längs durch das Innenrohr in einem Betriebszustand gleichsinnig und in dem anderen Betriebszustand gegensinnig sein. In einer anderen Ausführungsform kann in einem ersten Betriebszustand eine entsprechende gleichsinnige Strömung von Brenngas und Luft für ein Innenrohr und eine gegensinnige Strömung für ein weiteres Innenrohr geschaffen sein. Der Strömungssinn der Luft kann in dem zweiten Betriebszustand gerade umgekehrt werden, wobei die Strömungsrichtung des Brenngases jedoch vorzugsweise dieselbe bleibt.

Vorzugsweise weist die Brenneranordnung in beiden Betriebszuständen denselben Strömungsweg für das Brenngas bis zu den Austrittsöffnungen auf.

Das Innenrohr ist vorzugsweise mit einer Wasser- oder Wasserdampfquelle verbunden. Insbesondere kann der Brennstoff mit Wassernebel oder Wasserdampf gemischt werden, um die Rußbildung innerhalb des Innenrohrs, beispielsweise am Anfang des Innenrohrs bei der Brennstoffzuleitung, zu unterdrücken. Der Wasserdampf wird vorzugsweise mit einem Wärmetauscher erzeugt, der mit heißen Abgasen aus dem Strahlheizrohr gespeist wird.

Das Innenrohr kann mit einer Luftquelle verbunden sein, so dass dem Brennstoff Luft beigemischt werden kann. Auch dies kann zur Reduzierung von Rußbildung und damit zur Vermeidung von Ablagerungen, insbesondere in dem Innenrohr eingesetzt werden.

Das Innenrohr ist vorzugsweise mit einer Vormischkammer verbunden. Die Vormischkammer dient zur Herstellung eines Gemischs aus Brennstoff und Wasserdampf bzw. Wasser und/oder zur Herstellung eines Gemischs mit Brennstoff und Luft. Die Vormischkammer ist dazu mit einer Brennstoffquelle und der Wasser- bzw. Wasserdampfquelle und/oder der Luftquelle verbunden. Die Vormischkammer ist vorzugsweise vor dem an dem Brennstoffzuführungsabschnitt des Innenrohrs angeordneten Regenerator angeordnet.

Durch eine Gemischbildung mit Brennstoff und Wasser und/oder Luft kann Rußbildung verhindert werden, wobei das Atomverhältnis vom Sauerstoff zu Kohlenstoff in dem Gemisch, beispielsweise in der Vormischkammer, zwischen 0,5 und 1,5 liegt, vorzugsweise kleiner oder gleich als 1 ist.

Das Strahlheizrohr weist vorzugsweise einen Rekuperator zur Brennstoff- oder Gemischvorwärmung auf. Der Rekuperator kann zur thermischen Speisung mit einem der Regeneratoren gekoppelt sein. Vorzugsweise ist der Rekuperator konzentrisch zu einem, beispielsweise dem ersten Regenerator angeordnet. Vorzugsweise ist der Rekuperator entweder nur mit dem ersten Regenerator oder nur mit dem zweiten Regenerator gekoppelt. Der Rekuperator weist vorzugsweise eine Wärmespeicherfähigkeit auf, um die Zeit zwischen dem Ende des Aufheizens mit Abgaswärme und dem erneuten Aufheizen überbrücken zu können.

Bei dem erfindungsgemäßen Strahlheizrohr kann es sich um ein Längsrohr, beispielsweise ein zylindrisches Rohr handeln. Das Strahlheizrohr kann beispielsweise auch eine U-Form oder eine sonstige Form aufweisen. In einer Ausführungsform kann in jedem geraden Schenkel des U-förmigen Strahlheizrohres jeweils ein vorzugsweise gerades Innenrohr angeordnet sein. Das Strahlheizrohr mit den beiden Innenrohren lässt sie so relativ einfach fertigen. Auch hier kann die Brennstoffzuführung von einer Seite erfolgen.

Vorzugsweise ist das Verhältnis von der Länge des Strahlheizrohres zu dessen Durchmesser größer oder gleich 10.

Vorzugsweise ist das Strahlrohr an einem ersten Ende, an dem der erste Regenerator angeordnet ist, mit einer ersten Luft-Abgas-Leitung verbunden. Vorzugsweise ist das Strahlheizrohr an einem zweiten Ende, an dem der zweite Regenerator angeordnet ist, mit einer zweiten Luft-Abgas-Leitung verbunden. Eine Luft-Abgas-Leitung dient dem Transport von Verbrennungsluft in den Brennraum in einem Betriebszustand und dem Auslass von Abgas aus dem Brennraum in einem weiten Betriebszustand der Brenneranordnung. Vorzugsweise ist in der ersten Luft-Abgas-Leitung eine erste Durchflusssteuereinrichtung angeordnet. Vorzugsweise ist in der zweiten Luft-Abgas-Leitung eine zweite Durchflusssteuereinrichtung angeordnet. Eine Durchflusssteuereinrichtung kann beispielsweise ein Mengenmessgerät, wie beispielsweise eine Messblende aufweisen.

Ein erfindungsgemäßer Industrieofen weist eine vorbeschriebenen Brenneranordnung auf, wobei die Brenneranordnung ein oder mehrere, z.B. wenigstens zwei Strahlheizrohre aufweisen kann. Die Strahlheizrohre sind hinsichtlich der Zufuhr von Brennstoff oder Brennstoffgemisch und Verbrennungsluft parallel geschaltet. Vorzugsweise sind die Strahlheizrohre zueinander gleichsinnig von Brennstoff durchströmt. Von einem Betriebszustand zu einem weiteren kann sich der Richtungssinn der Durchströmung um beispielsweise 180° ändern. Vorzugsweise sind die Strahlheizrohre zueinander gleichsinnig von Verbrennungsluft durchströmt. Vorzugsweise sind die Innenrohre der Strahlheizrohre zueinander gleichsinnig von Brennstoff durchströmt. Von einem Betriebszustand zu einem weiteren kann der Richtungssinn der Durchströmung von Brennstoff durch die Innenrohre konstant bleiben. Die Brennstoffzufuhr erfolgt demnach vorzugsweise von einer Seite der Brenneranordnung her.

Das erfindungsgemäße Verfahren zum Betrieb einer Brenneranordnung mit einem Strahlheizrohr weist den Schritt des Zuführens von Luft in das Strahlheizrohr unter Aufheizung der Verbrennungsluft durch einen ersten Regenerator auf. Außerdem wird Brennstoff oder ein Gemisch aus Brennstoff und Luft und/oder Wasser bzw. Wasserdampf in das Innenrohr zugeführt und über die Länge des Innenrohrs durch Öffnungen in den Innenraum des Strahlheizrohres verteilt abgegeben. Der Brennstoff verbrennt in dem Strahlheizrohr und die Verbrennungsabgase werden aus dem Strahlheizrohr durch einen zweiten Regenerator abgegeben, der sich dabei aufheizt. In einem weiteren Betriebszustand erfolgt das Zuführen von Brennstoff oder Gemisch in das Innenrohr, vorzugsweise von derselben Seite, wie in dem ersten Betriebszustand. Lediglich die Seiten für die Luftzufuhr und die Abgasabgabe werden getauscht, so dass in dem zweiten Betriebszustand die Luft in das Strahlheizrohr durch den zweiten Regenerator unter Aufheizung desselben zugeführt wird, während das Abgas aus dem Strahlheizrohr durch den ersten Regenerator abgegeben wird, wobei sich dieser aufheizt. Das erfindungsgemäße Verfahren zum Betrieb der Brenneranordnung sieht das wiederholte Wechselschalten der Anordnung von dem ersten Betriebszustand in den zweiten Betriebszustand vor.

In den Figuren der Zeichnungen sind Ausführungsbeispiele der Erfindung veranschaulicht. Die Zeichnung ergänzt die Beschreibung. Es zeigen:
Figur 1 einen Industrieofen mit einer erfindungsgemäßen Brenneranordnung,
Figur 2 einen Industrieofen mit einer erfindungsgemäßen Brenneranordnung mit mehreren Strahlrohren und
Figur 3 eine Brenneranordnung mit einem U-förmigen Strahlrohr.

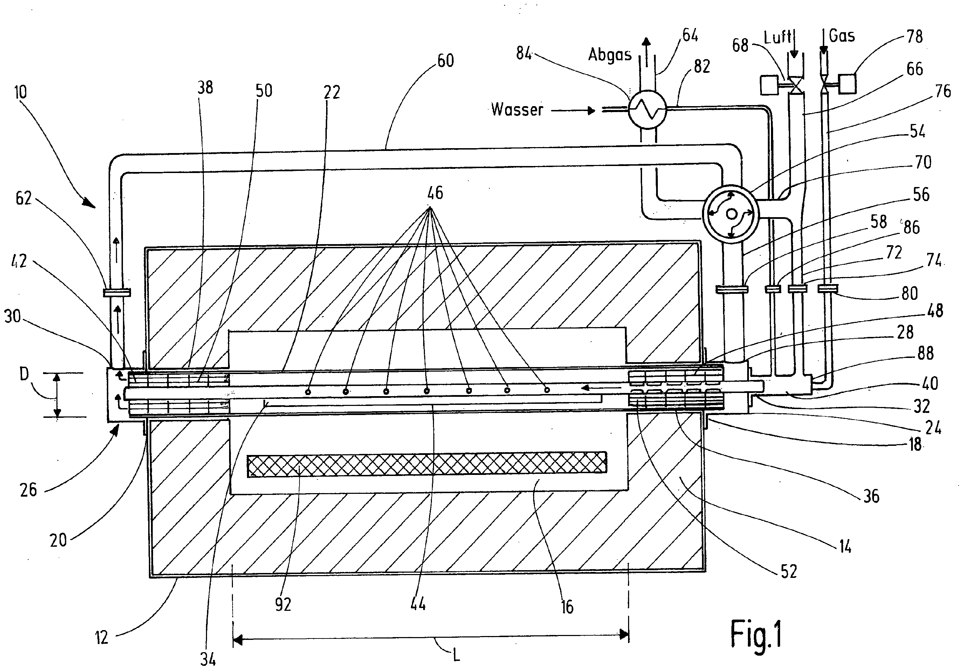

Der in Figur 1 dargestellte Industrieofen 10 weist ein Ofengehäuse 12 auf. Das Ofengehäuse 12 weist eine isolierende Wand 14 auf. Die Wand 14 umgibt einen Nutzraum 16 des Industrieofens 10. Die Wand 14 des Ofengehäuses weist eine erste Öffnung 18 und eine gegenüberliegende zweite Öffnung 20 auf. Durch die erste Öffnung 18, den Nutzraum 16 und die zweite Öffnung 20 erstreckt sich ein Strahlheizrohr 22. Das Strahlheizrohr 22 ist ein zylindrisches Langrohr. Das Strahlheizrohr 22 weist ein erstes Ende 24 bei der ersten Öffnung 18 und ein zweites Ende 26 bei der zweiten Öffnung 20 auf. An dem ersten Ende 24 außerhalb des Ofengehäuses 12 ist eine erste Luft-Abgas-Öffnung 28 angeordnet. An dem zweiten Ende 26 des Strahlheizrohrs ist eine zweite Luft-Abgas-Öffnung 30 angeordnet. An dem ersten Ende 24 ist eine Anschlussöffnung 32 angeordnet.

Ein Innenrohr 34 erstreckt sich durch die Anschlussöffnung 32, wobei diese durch das Innenrohr 34 vollständig eingenommen wird. Das Innenrohr 34 kann beispielsweise zylindrisch sein oder wenigstens einen entlang der Länge des Innenrohrs 34 konstanten Durchmesser bzw. eine konstante Breite aufweisen. Das Innenrohr 34 erstreckt sich innerhalb des Strahlheizrohres 22 konzentrisch zu diesem durch die Wand 14 des Ofengehäuses bei der ersten Öffnung 18 und der zweiten Öffnung 20. Das Innenrohr 34 weist einen ersten Endabschnitt 36 bei dem ersten Ende 24 des Strahlheizrohrs 22 auf. Das Innenrohr 34 weist einen zweiten Endabschnitt 38 bei dem zweiten Ende 26 des Strahlheizrohres 22 auf. Bei dem ersten Endabschnitt 36 weist das Innenrohr 34 eine Brennstoffanschlussöffnung 40 auf. Bei dem zweiten Endabschnitt 38 des Innenrohrs 34 weist dieses ein Innenrohrende 42 auf. Das Innenrohrende 42 ist vorzugsweise geschlossen, kann aber auch Öffnungen aufweisen. Zwischen dem ersten Endabschnitt 36 und dem zweiten Endabschnitt 38 weist das Innenrohr 34 einen Brennerabschnitt 44 mit entlang der Längserstreckung des Innenrohres 34 angeordneten, vorzugsweise wenigstens drei, Austrittsöffnungen 46 auf. Die Austrittsöffnungen 46 können beispielsweise in einer oder mehreren Reihen angeordnet sein. Austrittsöffnungen 46 können auch entlang des Umfangs des Innenrohrs 34 angeordnet sein.

Das Innenrohr 34 ist an seinem ersten Endabschnitt 36 von einem ersten Regenerator 48 umfasst, der sich entlang des ersten Endabschnitts 36 erstreckt. Der erste Regenerator 48 füllt den Querschnitt des Strahlheizrohrs 22 bei dem ersten Endabschnitt 36 außerhalb des Innenrohrs 34 ansonsten vollständig aus. Der erste Regenerator 48 ist vorzugsweise wenigstens abschnittsweise in der Wand 14 angeordnet. Der erste Regenerator 48 ist in Brennstoffströmungsrichtung hinter der ersten Luft-Abgas-Öffnung 28 angeordnet, so dass Luft in einem Betriebszustand durch die erste Luft-Abgas-Öffnung in das Strahlheizrohr eintritt und von dort durch den ersten Regenerator. Das Innenrohr 34 ist an seinem zweiten Endabschnitt 38 von einem zweiten Regenerator 50 umfasst, der sich entlang des zweiten Endabschnitts 38 erstreckt und der den Querschnitt des Strahlrohrs 22 außerhalb des Innenrohrs 34 ansonsten ausfüllt. Der zweite Regenerator 50 ist vorzugsweise wenigstens abschnittsweise in der Wand 14 angeordnet. Der zweite Regenerator 50 ist vor der zweiten Luft-Abgas-Öffnung 30 angeordnet, so dass das Abgas den zweiten Regenerator 50 in dem Betriebszustand vollständig der Länge nach durchläuft und anschließend durch die zweite Luft-Abgas-Öffnung 30 aus dem Strahlheizrohr 22 austritt. Innerhalb des Innenrohrs 34 innerhalb des ersten Regenerators 48 ist eine Rekuperatoranordnung 52 angeordnet. Der erste Regenerator 48 umfasst die Rekuperatoranordung 52 radial und axial. Die Rekuperatoranordnung 52 ist thermisch leitend mit dem ersten Regenerator 48 verbunden. Der zweite Regenerator 50 kann ebenfalls eine Rekuperatoranordnung aufweisen. In dem Ausführungsbeispiel in Figur 1 ist dem zweiten Regenerator 50 jedoch keine Rekuperatoranordnung zugeordnet.

Die Brenneranordnung weist ein Umschaltventil 54 auf. Das Umschaltventil ist über eine erste Luft-Abgas-Leitung 56 mit der ersten Luft-Abgas-Öffnung 28 des Strahlheizrohres 22 verbunden. In der ersten Luft-Abgas-Leitung 56 ist ein erstes Luftmengenmessgerät 58 angeordnet. Das Umschaltventil 54 ist über eine zweite Luft-Abgas-Leitung 60 mit der zweiten Luft-Abgas-Öffnung 30 des Strahlheizrohres 22 verbunden. In der zweiten Luft-Abgas-Leitung 60 ist ein zweites Luftmengenmessgerät 62 angeordnet.

Das Umschaltventil 54 ist mit einer Abgasleitung 64 verbunden. In einer Luftleitung 66 ist ein Luftregelventil 68 angeordnet. Die Luftleitung 66 ist mit einer ersten Luftzweigleitung 70 und einer zweiten Luftzweigleitung 72 verbunden. Die erste Luftzweigleitung 70 ist mit dem Umschaltventil 54 verbunden. In der zweiten Luftzweigleitung 72 ist ein drittes Luftmengenmessgerät 74 angeordnet.

Die Brenneranordnung weist ferner eine Brenngasleitung 76 auf. In der Brenngasleitung 76 ist ein Gasregelventil 78 und stromabwärts von dem Gasregelventil 78 ein Gasmengenmessgerät 80 angeordnet.

Die Brenneranordnung weist ferner eine Wasserleitung 82 auf. Ein Wärmetauscher 84 ist thermisch mit der Wasserleitung 82 verbunden. Der Wärmetauscher 84 ist thermisch mit der Abgasleitung 64 verbunden. In der Wasserleitung 82 ist stromabwärts des Wärmetauschers 84 ein Wasserdampfmengenmessgerät 86 angeordnet. Die Brenneranordnung weist eine Vormischkammer 88 auf. Die Vormischkammer 88 ist ausgangsseitig mit der Brennstoffanschlussöffnung 40 des Innenrohrs 34 verbunden. Die Vormischkammer 88 ist eingangsseitig mit der Brenngasleitung 76, mit der zweiten Luftzweigleitung 72 und der Wasserleitung 82 verbunden.

Die Brenneranordnung zur Erhitzung des in dem Nutzraum 16 angeordneten Wärmeguts 90 arbeitet in einem ersten Betriebszustand wie folgt:

Durch Verbrennung des Brenngases mit der Verbrennungsluft in dem Strahlheizrohr 22 entstehendes Abgas verlässt das Strahlheizrohr 22 wie in Figur 1 mit Pfeilen angedeutet durch den zweiten Regenerator 50. Der zweite Regenerator 50 wird dadurch aufgeheizt. Das Abgas strömt durch die zweite Luft-Abgas-Leitung 60 durch das Umschaltventil 54, das sich in einer ersten Schaltstellung befindet, und wird durch die Abgasleitung 64 aus der Brenneranordnung ausgestoßen. In der Abgasleitung 64 gibt das Abgas Restwärme an den Wärmetauscher 84 ab, um diesen thermisch zu speisen.

Durch die Luftleitung 66 wird Verbrennungsluft zur Verfügung gestellt, wobei die Luftmenge durch das Luftregelventil 68 geregelt wird. Die Luft strömt durch die erste Luftzweigleitung 70, durch das Umschaltventil 54 in die erste Luft-Abgas-Leitung 56. Dort kann die durch die erste Luft-Abgas-Leitung 56 strömende Luftmenge durch das erste Luftmengenmessgerät 58 gemessen und eingestellt werden. Die Verbrennungsluft strömt durch die erste Luft-Abgas-Öffnung 28 in das Strahlheizrohr 22. Anschließend strömt die Verbrennungsluft außerhalb des Innenrohrs 34 durch den ersten Regenerator 48. Der erste Regenerator 48 hat Wärme gespeichert, die dem ersten Regenerator 48 in einem Betriebszustand zuvor durch durchströmendes heißes Abgas zugeführt wurde. Der erste Regenerator 48 gibt die gespeicherte Wärme an die den ersten Regenerator 48 durchströmende Luft ab. Die erhitzte Luft tritt strömungsabwärts des ersten Regenerators 48 in den Abschnitt des Strahlheizrohres 22 bei dem Brennerabschnitt 44 des Innenrohres 34.

Die Vormischkammer 88 wird über die Brenngasleitung 76 mit Brenngas, beispielsweise Erdgas, gespeist. Die Gasmenge wird durch das Gasregelventil 78 geregelt und stromabwärts durch ein Gasmengenmessgerät 80 gemessen.

Die Vormischkammer 88 kann über die Wasserleitung 82 außerdem mit Wasserdampf gespeist werden, der in der Wasserleitung 82 mit der von dem Wärmetauscher 84 abgegebenen Wärme erzeugt wird. Die Wasserdampfmenge kann mit dem Wasserdampfmengenmessgerät 86 gemessen und eingestellt werden.

Die Vormischkammer 88 kann über die zweite Luftzweigleitung 82 außerdem mit Luft gespeist werden, wobei die Luftmenge mit dem dritten Luftmengenmessgerät 74 gemessen und eingestellt werden kann.

Der Brennstoff bzw. das Gemisch aus Brennstoff und Luft und/oder Wasserdampf strömt aus der Vormischkammer 88 durch die Brennstoffanschlussöffnung 40 in den ersten Endabschnitt 36 des Innenrohrs 34. Dort wird der Brennstoff oder das Gemisch durch die von der Rekuperatoranordnung 52 abgegebene Wärme vorgewärmt. Das vorgewärmte Gas strömt in den Brennerabschnitt 44 des Innenrohres 34.

Verbrennungsluft und Brenngas durchströmen das Strahlheizrohr 22 in diesem Betriebszustand gleichsinnig in Richtung zu dem zweiten Ende 26. Das Gas wird durch die Austrittsöffnungen 46 entlang des Innenrohrs 34 in Stufen entlang des Innenrohrs 34 an das innere Volumen des Strahlheizrohres 22 außerhalb des Innerohrs 34 bei dem Brennerabschnitt 44 abgegeben. Im Gegensatz dazu steht jedenfalls der durch die erste Luft-Abgas-Leitung 56 zugeführte Teil der Verbrennungsluft bis auf den bereits mit Verbrennungsgas umgesetzten Teil entlang des Innenrohrs 34 außerhalb des Innenrohrs 34 in der Verbrennungszone stets vollständig zur Verfügung.

Der nach dem ersten Regenerator 48 bestehende Luftüberschuss nimmt demnach hin zu dem zweiten Regenerator 50 ab. Die Verbrennung der Gasmenge mit der Luftmenge erfolgt in Stufen, so dass die durch die umgesetzte Menge frei werdende Wärme lokal vor der nächsten Stufe (bei einer nächsten Austrittsöffnung) an das Strahlheizrohr abgegeben werden kann. Die Temperatur bleibt auch durch den lokalen Luftüberschuss weit unter der adiabaten Verbrennungstemperatur. Dadurch ist die Bildung thermischer NOx weitgehend unterdrückt.

Der zweite Betriebszustand wird durch Umschalten des Umschaltventils in eine zweite Schaltstellung erreicht. Der Umschaltvorgang hat die Umkehr der Strömungsrichtung in dem Strahlrohr zur Folge. Dabei wird Luft, die bereits an der Verbrennung teilgenommen hatte und kurz vor dem bislang als Ausgang betriebenen Regenerator stand, nun durch die gesamte Länge des Strahlheizrohrs 22 zu dem anderen Regenerator zurück geschoben. Während dieses Umschaltvorgangs kann die Brennstoffmenge angepasst, z.B. zeitweilig abgesenkt werden.

In dem zweiten Betriebszustand arbeitet die Brenneranordnung wie folgt, wobei nur Unterschiede zu dem ersten Betriebszustand erläutert werden, insbesondere nimmt das Brenngas denselben Weg bis zu den Austrittsöffnungen, wie in dem ersten Betriebszustand:

Die durch die Luftleitung 66 zur Verfügung gestellte Verbrennungsluft strömt durch die erste Luftzweigleitung 70, durch das Umschaltventil 54 in die zweite Luft-Abgas-Leitung 60. Dort kann die durch die zweite Luft-Abgas-Leitung strömende Luftmenge durch das zweite Luftmengenmessgerät 62 gemessen und eingestellt werden. Die Verbrennungsluft strömt durch die zweite Luft-Abgas-Öffnung 30 in das Strahlheizrohr 22. Anschließend strömt die Verbrennungsluft außerhalb des Innenrohrs 34 durch den zweiten Regenerator 50. Der zweite Regenerator 50 gibt die in dem ersten Betriebszustand zuvor von dem Abgas aufgenommene Wärme an die den zweiten Regenerator 50 durchströmende Luft ab. Die erhitzte Luft tritt strömungsabwärts des zweiten Regenerators 50 in den Abschnitt des Strahlheizrohres 22 bei dem Brennerabschnitt 44 des Innenrohres 34. Die Strömung von Verbrennungsluft und Brenngas erfolgt in diesem zweiten Betriebszustand gegensinnig, da sich an der Zuführung des Brenngases bzw. des Gemischs in das Innenrohr 34 gegenüber dem ersten Betriebszustand nichts ändert. Die Abgabe des Brennstoffs in das innere Volumen des Strahlheizrohrs 22 außerhalb des Innenrohrs 34 erfolgt dennoch stufenweise mit den zuvor beschriebenen Effekten.

Für den Betrieb wird dauerhaft durch Schalten des Umschaltventils 54 zwischen dem ersten Betriebszustand und dem zweiten Betriebszustand hin und her gewechselt.

Zur Inbetriebnahme des Strahlheizrohrs 22 muss dieses mit einem nicht dargestellten Hilfsbrenner auf Zündtemperatur gebracht werden. Es kann auch eine nicht dargestellte Zündvorrichtung vorhanden sein, mit Hilfe derer das Brennstoff-Luft-Gemisch in dem Strahlheizrohr außerhalb des Innenrohres 34 bei dem Brennerabschnitt 44 gezündet wird.

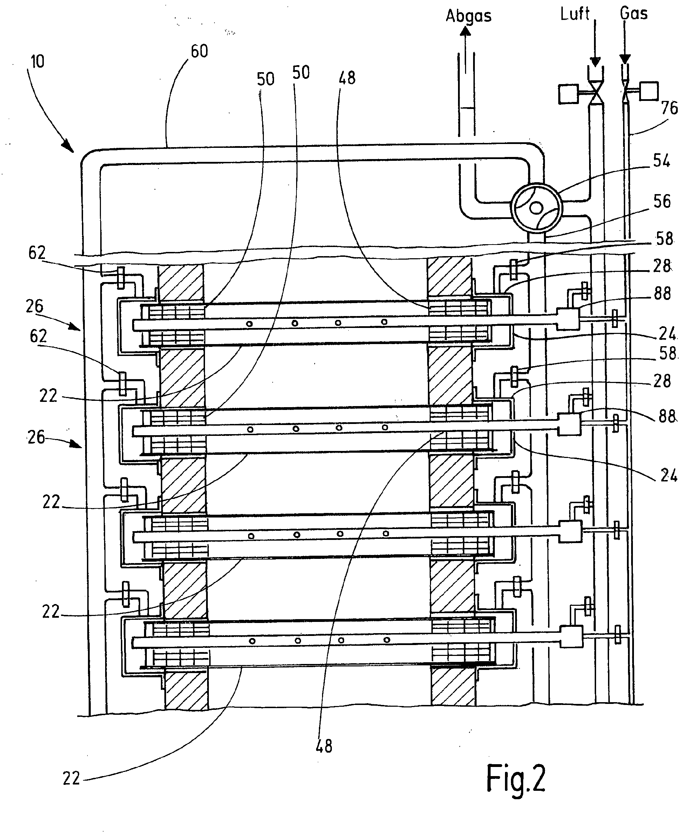

Figur 2 zeigt einen Ausschnitt aus einem Industrieofen 10 mit mehreren erfindungsgemäßen Strahlheizrohren 22 mit jeweils einem mit Austrittsöffnungen 46 versehenen Innenrohr 34.

Die Anlage weist eine einzige Ventilanordnung mit einem Umschaltventil 54 zum Umschalten zwischen dem ersten Betriebszustand und dem zweiten Betriebszustand auf. Die ersten Luft-Abgas-Öffnungen 28 sind jeweils an einer Seite des Industrieofens angeordnet. Die ersten Luft-Abgas-Öffnungen 28 sind mit derselben ersten Luftabgasleitung 56 verbunden. Die an den gegenüberliegenden zweiten Enden 26 angeordneten zweiten Luftabgasöffnungen sind mit derselben zweiten Luftabgasleitung 60 verbunden. Vor den ersten Luftabgasöffnungen 28 sind erste Luftmengenmessgeräte 58 angeordnet, mit Hilfe derer die Luftzufuhr in die Strahlheizrohre 22 durch die ersten Regeneratoren für jedes Strahlheizrohr 22 individuell gemessen und eingestellt werden kann. Vor den zweiten Luftabgasöffnungen 30 sind zweite Luftmengenmessgeräte 62 angeordnet, mit Hilfe derer die in die Strahlrohre 22 durch die zweiten Regeneratoren 50 abgegebenen Luftmengen für jedes Strahlheizrohr 22 individuell gemessen und eingestellt werden kann. Jedes Strahlheizrohr 22 weist eine eigene Vormischkammer 88 auf. Alle Vormischkammern 88 sind auf derselben, den ersten Enden 24 zugewandte, Seiten der Strahlheizrohre angeordnet. Die Vormischkammern sind an dieselbe zweite Luftzweigleitung 72 angeschlossen. Über den Strahlheizrohren jeweils zugeordnete dritte Luftmengenmessgeräte 74 kann die den Vormischkammern zugeführte Luft für jedes Strahlheizrohr 22 individuell gemessen und eingestellt werden.

Die Vormischkammern 88 der Strahlheizrohre 22 sind an dieselbe Brenngasleitung 76 angeschlossen. Die den Vormischkammern 88 zugeführten Gasmengen können über den Strahlheizrohren 22 individuell zugeordneten Gasmengenmessgeräte 80 für jedes Strahlheizrohr gemessen und eingestellt werden.

Durch die Anordnung wird eine parallele Schaltung der Strahlheizrohre erreicht. Eine einzige Luftquelle bzw. Brenngasquelle reicht für die Versorgung der Strahlheizrohre aus. Einander entsprechende Einrichtungen der Brenneranordnung, wie beispielsweise die Vormischkammern 88 oder die ersten Luftabgasöffnungen 28, sind auf derselben Seite des Industrieofens 10 bzw. der Anordnung von Strahlheizrohren 22 angeordnet. Dies vereinfacht die parallele Schaltung. Insgesamt ist der apparative Aufwand erheblich reduziert. Die Strahlheizrohre 22 werden in jeden Betriebszustand zueinander gleichsinnig durchströmt. Die Innenrohre werden in jedem Betriebszustand relativ zueinander und absolut bezogen auf die Brenneranordnung gleichsinnig durchströmt. Die Durchströmung eines Strahlheizrohrs und des dazugehörigen Innenrohrs wechselt zwischen Gleichsinnigkeit und Gegensinnigkeit mit dem im Zusammenhang mit Figur 1 beschriebenen Wechsel zwischen dem ersten und zweiten Betriebszustand.

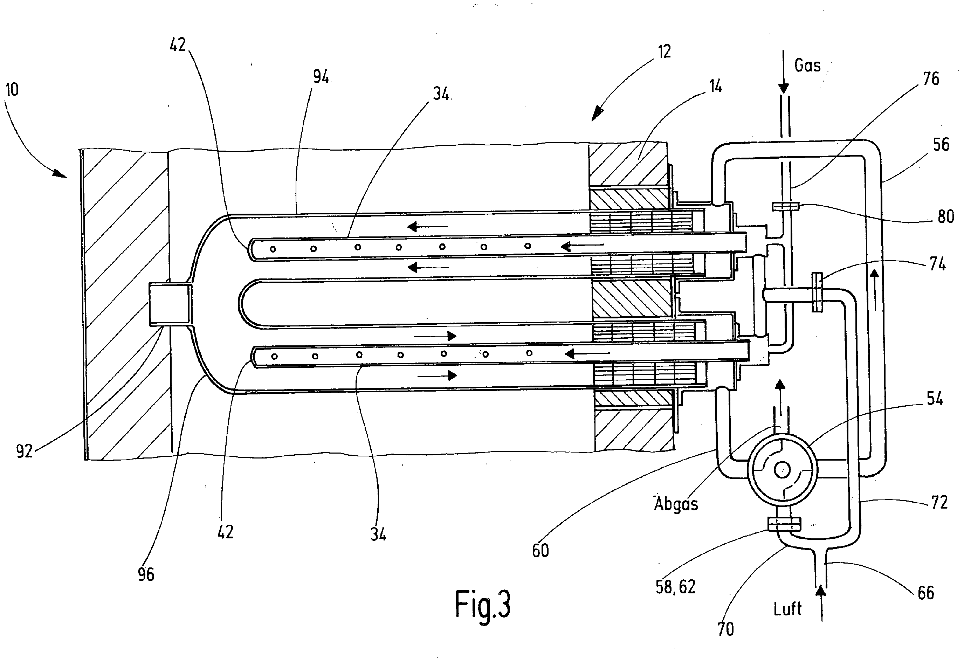

Figur 3 zeigt einen Industrieofen 10 mit einem erfindungsgemäßen U-förmigen Strahlheizrohr 22. Das Strahlheizrohr ist bei dem ersten Ende 24 und dem zweiten Ende 26 des Strahlheizrohres auf derselben Seite der Wand 14 des Ofengehäuses 12 gefasst. Die Wand 14 des Ofengehäuses auf der gegenüberliegenden Seite weist eine Lagerung für einen Lagerstutzen 92 auf. Bei diesem Ausführungsbeispiel ist in jedem geraden Schenkel 94 des U-förmigen Strahlheizrohrs 22 jeweils ein zylindrisches Innenrohr 34 angeordnet. Die Innenrohre 34 haben jeweils geschlossene Innenrohrenden 42, die dem bogenförmigen Abschnitt 96 des U-förmigen Strahlheizrohres 22 zugewandt sind. Der erste Regenerator 48 und der zweite Regenerator 50 sind jeweils an den Enden des Strahlheizrohrs 22 angeordnet. Der erste Regenerator 48 und/oder der zweite Regenerator 50 kann eine Rekuperatoranordnung enthalten und diese thermisch, der Anordnung aus Figur 1 entsprechend, speisen. Die Versorgung des Strahlheiz-rohrs mit durch den ersten Regenerator 48 und den zweiten Regenerator 50 außerhalb des Innenrohrs 34 durch das Strahlheizrohr strömende Verbrennungsluft erfolgt im Wesentlichen wie im Falle des Strahlheizrohres aus Figur 1. In diesem Falle ist in der ersten Luftzweigleitung 70 ein erstes Luftmengenmessgerät 58 vor dem Umschaltventil 54 angeordnet, das zur Messung und Einstellung der in das Strahlheizrohr 22 abgegebenen Verbrennungsluftmenge einsetzbar ist.

Die Versorgung der Innenrohre 34 mit Brenngas bzw. Brenngasluftgemisch erfolgt parallel. Die beiden Innenrohre 34 werden vorzugsweise nicht alternierend mit Brenngas versorgt, sondern in jedem Betriebszustand werden beide Innenrohre 34 mit Brenngas gespeist. Die Innenrohre 34 weisen dazu jeweils eine Vormischkammer 88 auf. Die Vormischkammern sind an dieselbe zweite Luftzweigleitung 72 angeschlossen. Vor der T-kreuzartigen Verzweigung der zweiten Luftzweigleitung 72 zu den Vormischkammern 88 ist ein drittes Luftmengenmessgerät angeordnet, das zur Messung und Einstellung der in die Vormischkammern 88 abgegebenen Luftmenge einsetzbar ist. Die Vormischkammern 88 werden außerdem parallel mit Brenngas versorgt. Dazu sind diese mit derselben Brenngasleitung 76 verbunden. Vor der Verzweigung der Brenngasleitung 76 zu den Vormischkammern 88 ist ein Gasmengenmessgerät 80 angeordnet, das die Messung bzw. Einstellung der Brenngasmenge, die den Vormischkammern 88 zugeführt wird, erlaubt. Durch die parallele Versorgung der Innenrohre mit Brennstoff oder Gemisch aus Brennstoff und Luft und die Versorgung der Innenrohre und Strahlheizrohre von einer Seite der Ofenwand 14 her, ist der apparative Aufwand für die Anlage erheblich reduziert. Das Strahlheizrohr kann von einer Seite in den Industrieofen 10 eingebaut werden. Die Innenrohre 34 sind in jedem Betriebszustand zueinander gleichsinnig, zu dem bogenförmigen Abschnitt 96 hin, durchströmt. In jedem Betriebszustand sind ein Innenrohr und das Strahlheizrohr gleichsinnig durchströmt und ein zweites Innenrohr und das Strahlheizrohr sind gegensinnig durchströmt. Der Durchströmungssinn eines Innenrohrs relativ zu dem Durchströmungssinn durch das Strahlheizrohr wechselt mit jedem Wechsel zwischen den beiden Betriebszuständen.

Es wird ein Konzept für eine Brenneranordnung für Industrieöfen 10 insbesondere mit schlanken Strahlrohren 20 angegeben. Die erfindungsgemäße Brenneranordnung weist wenigstens ein Strahlheizrohr 22 auf. Die Brenneranordnung weist einen ersten Regenerator 48 auf, wobei der erste Regenerator 48 an einem ersten Ende 24 angeordnet ist. Ein zweiter Regenerator 50 der Brenneranordnung ist an einem zweiten Ende 26 des Strahlheizrohres 22 angeordnet. Der erste Regenerator 48 und der zweite Regenerator 50 sind mit einer Ventilanordnung 54 verbunden. Die Ventilanordnung 54 weist einen ersten Betriebszustand und einen zweiten Betriebszustand zur wechselweisen Beaufschlagung des Strahlheizrohres 22 über einen Regenerator 48, 50 mit Verbrennungsluft und Abführung von Abgasen über den jeweils anderen Regenerator 48, 50 auf. Innerhalb des Strahlheizrohres 22 ist wenigstens ein Innenrohr 34 angeordnet. Das Innenrohr erstreckt sich wenigstens abschnittsweise entlang des Strahlheizrohres 22. Das Innenrohr 34 ist mit einer Brennstoffzufuhrleitung 76 verbunden. Das Innenrohr 34 weist Austrittsöffnungen 46 auf, die entlang der Längserstreckung des Innenrohrs 34 auf dem Innenrohr 34 angeordnet sind und das Innere des Innenrohrs mit dem sich außerhalb des Innenrohrs befindenden Volumens des Strahlheizrohres 22 zu verbinden. Durch die stufenweise Abgabe des Brennstoffs und gegebenenfalls durch den lokal vorherrschenden großen Luftüberschuss ist die NOx-Bildung weitgehend unterdrückt.

**Bezugszeichenliste:**

| | |
|---|---|
| 10 | Industrieofen |
| 12 | Ofengehäuse |
| 14 | Wand |
| 16 | Nutzraum |
| 18 | Erste Öffnung |
| 20 | Zweite Öffnung |
| 22 | Strahlheizrohr |
| 24 | Erstes Ende |
| 26 | Zweites Ende |
| 28 | Erste Luft-Abgas-Öffnung |
| 30 | Zweite Luft-Abgas-Öffnung |
| 32 | Anschlussöffnung |
| 34 | Innenrohr |
| 36 | Erster Endabschnitt |
| 38 | Zweiter Endabschnitt |
| 40 | Brennstoffanschlussöffnung |
| 42 | Innenrohrende |
| 44 | Brennerabschnitt |
| 46 | Austrittsöffnungen |
| 48 | Erster Regenerator |
| 50 | Zweiter Regenerator |
| 52 | Rekuperatoranordnung |
| 54 | Umschaltventil |
| 56 | Erste Luft-Abgas-Leitung |
| 58 | Erstes Luftmengenmessgerät |
| 60 | Zweite Luft-Abgas-Leitung |
| 62 | Zweites Luftmengenmessgerät |
| 64 | Abgasleitung |
| 66 | Luftleitung |
| 68 | Luftregelventil |
| 70 | Erste Luftzweigleitung |
| 72 | Zweite Luftzweigleitung |
| 74 | Drittes Luftmengenmessgerät |
| 76 | Brenngasleitung |
| 78 | Gasregelventil |
| 80 | Gasmengenmessgerät |
| 82 | Wasserleitung |
| 84 | Wärmetauscher |
| 86 | Wasserdampfmengenmessgerät |
| 88 | Vormischkammer |
| 90 | Wärmgut |
| 92 | Lagerstutzen |
| 94 | Gerader Schenkel |
| 96 | Bogenförmiger Abschnitt |
| D | Durchmesser |
| L | Länge |

## Patentansprüche

1. Brenneranordnung mit
einem Strahlheizrohr (22),
einem ersten Regenerator (48) und einem zweiten Regenerator (50), wobei der erste Regenerator (48) an einem ersten Ende (24) und der zweite Regenerator (50) an einem zweiten Ende (26) des Strahlheizrohres (22) angeordnet ist,
wobei der erste Regenerator (48) und der zweite Regenerator (50) mit einer Ventilanordnung (54) verbunden sind, wobei die Ventilanordnung (54) einen ersten Betriebszustand und einen zweiten Betriebszustand zur wechselweisen Beaufschlagung des Strahlheizrohres (22) über einen Regenerator (48, 50) mit Verbrennungsluft und Abführung von Abgas über den jeweils anderen Regenerator (48, 50) aufweist,
wobei innerhalb des Strahlheizrohres (22) wenigstens ein Innenrohr (34) angeordnet ist, das sich wenigstens abschnittsweise entlang des Strahlheizrohres (22) erstreckt,
wobei das Innenrohr (34) mit einer Brennstoffzufuhrleitung (76) verbunden ist,
**dadurch gekennzeichnet, dass** das Innenrohr (34) Austrittsöffnungen (46) aufweist, die entlang der Längserstreckung des Innenrohrs (34) auf dem Innenrohr (34) angeordnet sind,
wobei das Innenrohr (34) mit einer Wasser- oder Wasserdampfquelle (82, 84) und/oder mit einer Luftquelle (66) verbunden ist, wobei das Innenrohr (34) mit einer Vormischkammer (88) zur Herstellung eines Gemischs aus Brennstoff und Wasserdampf und/oder Luft verbunden ist, die mit der Brennstoffquelle (76) und der Wasser- oder Wasserdampfquelle (82, 84) und/oder der Luftquelle (66) verbunden ist.

2. Brenneranordnung nach Anspruch 1, wobei das Verhältnis von dem Durchmesser (D) des Strahlheizrohres (22) zu dessen Länge (L) kleiner Eins zu fünf, vorzugsweise kleiner Eins zu zehn, ist.

3. Brenneranordnung, nach einem der vorherigen Ansprüche wobei das Innenrohr (34) Austrittsöffnungen (46) aufweist, die entlang des Umfangs des Innenrohrs (34) auf dem Innenrohr (34) angeordnet sind.

4. Brenneranordnung nach einem der vorherigen Ansprüche, wobei die Austrittsöffnungen (46) an dem Innenrohr (34) derart angeordnet sind, dass das Strahlheizrohr (22) entlang des Brennerabschnitts (44) des Innenrohrs (34) eine einheitliche Temperatur aufweist.

5. Brenneranordnung nach einem der vorherigen Ansprüche, wobei das Innenrohr (34) einseitig mit Brennstoff oder Gemisch mit Brennstoff gespeist ist.

6. Brenneranordnung nach Anspruch 1, wobei das Atomverhältnis von Sauerstoff zu Kohlenstoff in dem Gemisch, beispielsweise in der Vormischkammer (88), bis zu Eins ist.

7. Brenneranordnung nach einem der vorherigen Ansprüche, mit einem Rekuperator (52) zur Brennstoff- oder Brennstoffgemischvorwärmung.

8. Brenneranordnung nach Anspruch 7, wobei der Rekuperator (52) konzentrisch zu einem Regenerator (48) angeordnet ist.

9. Brenneranordnung nach einem der vorherigen Ansprüche, wobei das Strahlheizrohr (22) ein Längsrohr ist.

10. Brenneranordnung nach einem der vorherigen Ansprüche, wobei das Strahlheizrohr (22) ein U-förmiges Strahlheizrohr ist.

11. Industrieofen (10) mit einer Brenneranordnung nach einem der vorherigen Ansprüche mit wenigstens zwei Strahlheizrohren (22), wobei die Strahlheizrohre (22) hinsichtlich der Zufuhr von Brennstoff oder Brennstoffgemisch und Verbrennungsluft parallel geschaltet sind.

12. Verfahren zum Betrieb einer Brenneranordnung nach einem der Ansprüche 1 bis 10 mit den Schritten:
- Zuführen von Brennstoff oder Gemisch in das Innenrohr (34) und über die Länge des Innenrohrs (34) verteiltes stufenweises Abgeben des Brennstoffs oder des Brennstoffgemischs in das Strahlheizrohr (22) über Austrittsöffnungen (46) in dem Innenrohr (34) in einem ersten Betriebszustand und in einem zweiten Betriebszustand,
- Zuführen von Luft in das Strahlheizrohr (22) unter Aufheizung der Luft durch einen ersten Regenerator (48) und Abgabe des Abgases aus dem Strahlheizrohr (22) durch einen zweiten Regenerator (50) unter Aufheizung des zweiten Regenerators in einem ersten Betriebszustand und
- Zuführen von Luft in das Strahlheizrohr (22) unter Aufheizung der Luft durch den zweiten Regenerator (48) und Abgabe des Abgases aus dem Strahlheizrohr (22) durch den ersten Regenerator (50) unter Aufheizung des ersten Regenerators in einem zweiten Betriebszustand
- Alternierendes Umschalten zwischen dem ersten Betriebszustand und dem zweiten Betriebszustand.

## Claims

1. Burner arrangement with
a radiant heating tube (22),
a first regenerator (48) and a second regenerator (50), wherein the first regenerator (48) is arranged at a first end (24) and the second regenerator (50) is arranged at a second end (26) of the radiant heating tube (22),
wherein the first regenerator (48) and the second regenerator (50) are connected to a valve arrangement (54),
wherein the valve arrangement (54) has a first operating state and a second operating state for alternate loading of the radiant heating tube (22) with combustion air via one regenerator (48, 50) and discharge of exhaust gas via the respective other regenerator (48, 50),
wherein at least one inner tube (34) is arranged inside the radiant heating tube (22) and extends at least in portions along the radiant heating tube (22),
wherein the inner tube (34) is connected to a fuel supply line (76),
**characterised in that**
the inner tube (34) has outlet openings (46) which are arranged on the inner tube (34) along the longitudinal extension of the inner tube (34),
wherein the inner tube (34) is connected to a source (82, 84) of water or water vapour and/or to a source (66) of air,
wherein the inner tube (34) is connected to a premixing chamber (88) for production of a mixture of fuel and water vapour and/or air, which chamber is connected to the fuel source (76) and to the water or water vapour source (82, 84) and/or the air source (66).

2. Burner arrangement according to claim 1, wherein the ratio of the diameter (D) of the radiant heating tube (22) to its length (L) is less than one to five, preferably less than one to ten.

3. Burner arrangement according to one of the preceding claims, wherein the inner tube (34) has outlet openings (46) which are arranged on the inner tube (34) along the periphery of the inner tube (34).

4. Burner arrangement according to any of the preceding claims, wherein the outlet openings (46) on the inner tube (34) are arranged such that the radiant heating tube (22) has a uniform temperature along the burner portion (44) of the inner tube (34).

5. Burner arrangement according to any of the preceding claims, wherein the inner tube (34) is supplied on one side with fuel or a fuel mixture.

6. Burner arrangement according to claim 1, wherein the atomic ratio of oxygen to carbon in the mixture, for example in the premixing chamber (88), is up to one.

7. Burner arrangement according to any of the preceding claims, with a recuperator (52) for preheating of the fuel or fuel mixture.

8. Burner arrangement according to claim 7, wherein the recuperator (52) is arranged concentrically to a regenerator (48).

9. Burner arrangement according to any of the preceding claims, wherein the radiant heating tube (22) is a longitudinal tube.

10. Burner arrangement according to any of the preceding claims, wherein the radiant heating tube (22) is a U-shaped radiant heating tube.

11. Industrial furnace (10) with a burner arrangement according to any of the preceding claims with at least two radiant heating tubes (22), wherein the radiant heating tubes (22) are connected in parallel with regard to the supply of fuel or fuel mixture and combustion air.

12. Method for operating a burner arrangement according to any of claims 1 to 10, with the steps:
- supply of fuel or a mixture into the inner tube (34) and output of the fuel or fuel mixture in a stepped fashion, distributed over the length of the inner tube (34), into the radiant heating tube (22) via outlet openings (46) in the inner tube (34), in a first operating state and in a second operating state,
- supply of air to the radiant heating tube (22) with heating of the air through a first regenerator (48) and output of exhaust gas from the radiant heating tube (22) through a second regenerator (50) with heating of the second regenerator, in a first operating state, and
- supply of air to the radiant heating tube (22) with heating of the air through the second regenerator (48) and output of exhaust gas from the radiant heating tube (22) through the first regenerator (50) with heating of the first regenerator, in a second operating state,
- alternate switching between the first operating state and the second operating states.

## Revendications

1. Dispositif de brûleur comprenant
un tube chauffant radiant (22),
un premier régénérateur (48) et un deuxième régénérateur (50), le premier régénérateur (48) étant placé à une première extrémité (24) et le deuxième régénérateur (50) étant placé à une deuxième extrémité (26) du tube chauffant radiant (22),
sachant que le premier régénérateur (48) et le deuxième régénérateur (50) sont reliés à un dispositif de vannes (54),
sachant que le dispositif de vannes (54) présente un premier état de fonctionnement et un deuxième état de fonctionnement en vue de l'apport d'air comburant au tube chauffant radiant (22), par l'intermédiaire d'un régénérateur (48, 50), en alternance avec l'évacuation des gaz brûlés, par l'intermédiaire respectivement de l'autre régénérateur (48, 50),
sachant qu'il est prévu à l'intérieur du tube chauffant radiant (22), au moins un tube interne (34) qui s'étend au moins par portions le long du tube chauffant radiant (22),
sachant que le tube interne (34) est relié à une conduite d'alimentation en combustible (76),
**caractérisé en ce que** le tube interne (34) présente des orifices de sortie (46) qui sont disposés sur le tube interne (34), le long de la dimension longitudinale du tube interne (34),
sachant que le tube interne (34) est relié à une source d'eau ou de vapeur d'eau (82, 84) et/ou à une source d'air (66), le tube interne (34) étant relié à une chambre de prémélange (88) qui est destinée à préparer un mélange de combustible et de vapeur d'eau et/ou d'air et qui est reliée à la source de combustible (76) et à la source d'eau et/ou de vapeur d'eau (82, 84) et/ou la source d'air (66).

2. Dispositif de brûleur selon la revendication 1, dans lequel le rapport entre le diamètre (D) du tube chauffant radiant (22) et la longueur (L) de celui-ci est inférieur à un à cinq, de préférence inférieur à un à dix.

3. Dispositif de brûleur selon l'une des revendications précédentes, dans lequel le tube interne (34) présente des orifices de sortie (46) qui sont disposés sur le tube interne (34), le long de la circonférence du tube interne (34).

4. Dispositif de brûleur selon l'une des revendications précédentes, dans lequel les orifices de sortie (46) sont disposés sur le tube interne (34) de telle manière que le tube chauffant radiant (22) présente une température uniforme le long du tronçon de brûleur (44) du tube interne (34).

5. Dispositif de brûleur selon l'une des revendications précédentes, dans lequel le tube interne (34) est alimenté sur un côté avec du combustible ou un mélange comportant du combustible.

6. Dispositif de brûleur selon la revendication 1, dans lequel le rapport atomique de l'oxygène au carbone dans le mélange, par exemple dans la chambre de prémélange (88), va jusqu'à un.

7. Dispositif de brûleur selon l'une des revendications précédentes, comprenant un récupérateur (52) destiné au préchauffage du combustible ou du mélange de combustible.

8. Dispositif de brûleur selon la revendication 7, dans lequel le récupérateur (52) est disposé de façon concentrique par rapport à un régénérateur (48).

9. Dispositif de brûleur selon l'une des revendications précédentes, dans lequel le tube chauffant radiant (22) est un tube longitudinal.

10. Dispositif de brûleur selon l'une des revendications précédentes, dans lequel le tube chauffant radiant (22) est un tube chauffant radiant en forme de U.

11. Four industriel (10) doté d'un dispositif de brûleur selon l'une des revendications précédentes, comprenant au moins deux tubes chauffants radiants (22), sachant que les tubes chauffants radiants (22) sont montés en parallèle en ce qui concerne l'alimentation en combustible ou en mélange de combustible et en air comburant.

12. Procédé permettant de faire fonctionner un dispositif de brûleur selon l'une des revendications 1 à 10, comprenant les étapes suivantes :
- amenée de combustible ou d'un mélange dans le tube interne (34) et distribution graduelle, répartie sur la longueur du tube interne (34), du combustible ou du mélange de combustible dans le tube chauffant radiant (22), par l'intermédiaire d'orifices de sortie (46) du tube interne (34), dans un premier état de fonctionnement et dans un deuxième état de fonctionnement,
- amenée d'air dans le tube chauffant radiant (22), avec chauffage de l'air par un premier régénérateur (48), et évacuation des gaz brûlés du tube chauffant radiant (22), par un deuxième régénérateur (50), avec chauffage du deuxième régénérateur, dans un premier état de fonctionnement, et
- amenée d'air dans le tube chauffant radiant (22), avec chauffage de l'air par le deuxième régénérateur (48), et évacuation des gaz brûlés du tube chauffant radiant (22), par le premier régénérateur (50), avec chauffage du premier régénérateur, dans un deuxième état de fonctionnement,
- commutation, en alternance, entre le premier état de fonctionnement et le deuxième état de fonctionnement.
